# EUROPÄISCHE PATENTSCHRIFT

(11) **EP 2 550 851 B1**
(45) Veröffentlichungstag und Bekanntmachung des Hinweises auf die Patenterteilung: **25.11.2015**
(21) Anmeldenummer: 12166962.6
(22) Anmeldetag: 07.05.2012
(51) Int. Cl.: A01D 41/127, A01D 75/28, A01F 12/44

(54) **Reinigungsvorrichtung für einen Mähdrescher**
Cleaning device for a combine harvester
Dispositif de nettoyage pour une moissonneuse-batteuse

(30) Priorität: 29.07.2011 DE 102011052280
(43) Veröffentlichungstag der Anmeldung: 30.01.2013
(73) Patentinhaber: CLAAS Selbstfahrende Erntemaschinen GmbH, 33428 Harsewinkel (DE)
(72) Erfinder: Behnke, Willi, 33803 Steinhagen (DE); Fitzner, Werner, 48231 Warendorf (DE)

(56) Entgegenhaltungen:
- EP-A1- 1 588 600
- EP-A2- 1 348 495
- DE-A1- 2 632 560
- DE-A1- 10 111 531
- DE-A1-102004 023 767

## Beschreibung

Die Erfindung betrifft gemäß dem Oberbegriff des Patentanspruch 1 ein Verfahren zum Betreiben einer Reinigungsvorrichtung eines Mähdrescher mit einer Siebvorrichtung, in welcher Körner von sonstigen Verunreinigungen getrennt werden, wobei die Siebvorrichtung einen über einen Schwingantrieb in Längs- und Querschwingungen versetzten Siebkasten aufweist, der ein Obersieb sowie zumindest ein Untersieb aufnimmt, mit einer Messeinrichtungen, die zumindest dem Obersieb zugeordnet ist und an diesem eine Erntegutverteilung über die an diesem erzielte Kornabscheidung bestimmt, mit einem Querneigungssensor, der eine Querneigung des Mähdreschers ermittelt, und wobei die ermittelten Messwerte einer Steuereinheit zugeführt werden, über die eine Phasenverstellung der Querschwingungen des Schwingantriebes und eine Verstellung der Siebvorrichtung gesteuert werden.

Weiterhin betrifft die Erfindung gemäß dem Oberbegriff des unabhängigen Patentanspruchs 4 eine Reinigungsvorrichtung eines Mähdreschers mit einer über einen Schwingantrieb in Längs- und Querschwingungen versetzten Siebvorrichtung, die einen Siebkasten mit einem darin angeordneten Obersieb sowie zumindest einem Untersieb aufweist, mit einer zumindest dem Obersieb zugeordneten Messeinrichtung zur Bestimmung der am Obersieb erzielten Erntegutverteilung über die an diesem erzielte Kornabscheidung sowie einem Querneigungssensor zur Erfassung einer Neigung des Mähdreschers an einem Hang, wobei die Messeinrichtung und der Querneigungssensor mit einer Steuereinheit verbunden sind, welche eine Phasenverstellung der Querschwingungen des Schwingantriebes und eine Sieböffnungsweite regelt.

Mähdrescher sind mit einer Reinigungsvorrichtung zur Abscheidung von Verunreinigungen aus dem Erntegut versehen. Diese besteht hauptsächlich aus einem Gebläse und einer Siebvorrichtung, wobei das Erntegut der Siebvorrichtung über einen schwingend angetriebenen Vorbereitungsboden zugeführt wird. Dabei gelangt zunächst ein mittels eines Dreschwerks aus dem geernteten Halmgut abgeschiedenes Gemisch aus Körnern, Spreu, Kurzstroh und Grannen auf den Vorbereitungsboden, der dieses Gemisch der Siebvorrichtung zuführt. Die gleichen Bestandteile des Ernteguts werden dem Vorbereitungsboden bzw. der Siebvorrichtung auch über Hordenschüttler und einem diesen nachgeschalteten Rücklaufboden zugeführt.

Wird der Mähdrescher während des Erntevorgangs in einer Hanglage betrieben, so dass er um seine Längsmittelachse geneigt ist, sammelt sich zwangsläufig ein großer Teil des dem Vorbereitungsboden und somit den Sieben zugeführten Erntegutes jeweils im hangabwärts gerichteten Bereich der Reinigungsvorrichtung. Als Folge dieser ungleichmäßigen Verteilung des Ernteguts auf der Siebvorrichtung ist diese nicht mehr dazu in der Lage, in effizienter Weise die Körner von den sonstigen Bestandteilen des Erntegutstroms zu trennen. Das kann dazu führen, dass ein Teil des Erntegutstroms als sogenannte Körnerverluste über die Siebe auf das Feld gelangt.

Es sind Vorrichtungen zum Hangausgleich an Mähdreschern bekannt, bei denen das Fahrwerk des Mähdreschers derart verstellt wird, dass sich sowohl das Dreschwerk als auch die Reinigungsvorrichtung in einer waagerechten Lage befinden, wobei dann allerdings das Schneidwerk in einer Weise zurückgeschwenkt werden muss, dass es nach wie vor parallel zur Feldoberfläche betrieben wird. Der Aufwand für die Schaffung eines derartigen Hangausgleichs an Mähdreschern ist allerdings sehr groß und eignet sich nur für spezielle Hangmähdrescher, die überwiegend in einer derartigen Schräglage betrieben werden.

Weiterhin ist es allgemein bekannt, einen Hangausgleich an der Reinigungsvorrichtung dadurch zu schaffen, dass sowohl der Vorbereitungsboden als auch die Siebvorrichtung verstellbar im Inneren des Mähdreschers angeordnet sind, so dass sie in eine waagerechte Lage bringbar sind. Die entsprechende Verstellung der Reinigungsvorrichtung ist ebenfalls mit einem erheblichen technischen Aufwand verbunden.

Ein Verfahren zum Betreiben einer Reinigungsvorrichtung eines Mähdreschers sowie eine entsprechende Reinigungsvorrichtung eines Mähdreschers der im Oberbegriff der Patentansprüche 1 und 4 genannten Gattung ist aus der DE 10 2004 023 767 A1 bekannt. Zur Beseitigung des zuvor erläuterten Problems einer ungleichmäßigen Erntegutverteilung auf den Sieben der Reinigungsvorrichtung ist dabei vorgesehen, den die Siebe aufnehmenden Siebkasten nicht nur in Richtung der Längsachse des Mähdreschers schwingend zu bewegen, sondern den Siebkasten auch in Querschwingungen zu versetzen. Diese Querschwingungen werden dabei so geregelt, dass eine gleichmäßige Verteilung des Erntegutes sowohl am Obersieb als auch am Untersieb der Reinigungsvorrichtung erzielt werden kann. Dabei werden als Parameter zur Regelung der Querschwingungen zum einen über zumindest einen Querneigungssensor die Neigung des Mähdreschers am Hang und zum anderen über Körnermesseinrichtungen in Form von Sensoren, die an den Sieben angeordnet sind, die Querabscheidung ermittelt. Die Querabscheidung, die aus der über die Siebe abgeschiedenen Körnermenge abgeleitet wird, ermöglicht eine Aussage darüber, wie sich der Erntegutstrom insgesamt auf der Reinigungsvorrichtung verteilt. Die Querschwingungen der Siebvorrichtung sollen dabei zunächst in Abhängigkeit von der Neigung des Mähdreschers vorgeregelt und anschließend in Abhängigkeit von der Querabscheidung feingeregelt werden. Weiterhin ist vorgesehen, bei einer Überlastung der Reinigungseinrichtung bei Hangfahrt an steilen Hängen die Sieböffnungen des Obersiebes und des Untersiebes in Abhängigkeit von der Querabscheidung über Stellglieder einzustellen.

Es ist Aufgabe der vorliegenden Erfindung, ein Verfahren zum Betreiben einer Reinigungsvorrichtung eines Mähdreschers sowie die für dieses Verfahren einsetzbare Reinigungsvorrichtung derart weiterzubilden, dass beim Ernten in extremer Hanglage mit daraus resultierender ungleichmäßiger Erntegutverteilung an der Reinigungsvorrichtung auftretende Körnerverluste vermieden werden.

Diese Aufgabe wird, ausgehend vom Oberbegriff des Patentanspruchs 1, in Verbindung mit dessen kennzeichnenden Merkmalen gelöst. Gemäß dem kennzeichnenden Teil des Patentanspruchs 1 soll bei Überschreibung eines Grenzwertes der Querneigung des Mähdreschers und/oder eines Grenzwertes der am Obersieb erzielten Kornabscheidung ein die Sieböffnungsweite bestimmender Querschnitt nur am Obersieb vergrößert werden. Tritt folglich eine kritische Seitenneigung auf, in der das Erntegut aufgrund der Querschwingungen der Siebvorrichtung nicht mehr im ausreichenden Maße verteilt werden kann, so wird nur die Sieböffnungsweite des Obersiebs vergrößert. In diesem Fall wird bewusst in Kauf genommen, dass kurzzeitig Verunreinigungen gemeinsam mit dem quer abgeschiedenen Körnerstrom auf das Untersieb gelangen, wo sie dann aber von den Körnern abgeschieden werden.

Demgegenüber ist nach der DE 10 2004 023 767 A1 beim Befahren steiler Hänge vorgesehen, die Sieböffnungsweite sowohl des Obersiebes als auch des Untersiebes zu vergrößern. Jedes dieser Siebe wird dabei an seiner gesamten Siebfläche verstellt.

In weiterer Ausgestaltung der Erfindung soll im Rahmen des Verfahrens die Erntegutverteilung am Obersieb über die an diesem erzielte Kornabscheidung bestimmt werden, wobei zu diesem Zweck ein Körnerstrom an zumindest einer Stelle unterhalb des Obersiebes gemessen wird. Dabei ist es sinnvoll, die Kornabscheidung durch entsprechende Messeinrichtungen über die gesamte Breite des Obersiebes zu bestimmen, um eine den einzelnen Körnerströmen zugeordnete Abscheidekurve zu ermitteln. Dabei ist es zweckmäßig, die entsprechenden Messeinrichtungen im hinteren Bereich des Obersiebes, das heißt, in einem dem Heck des Mähdreschers zugewandten Bereich, anzuordnen.

Es wird nach dem Verfahren an einem hangabwärts gerichteten Sektor des Obersiebes bei Überschreitung des Grenzwertes der Querneigung des Mähdreschers und/oder des Grenzwertes der Kornabscheidung die Sieböffnungsweite vergrößert. Folglich besteht die Möglichkeit, an dem Obersieb die Sieböffnungsweite in den Bereichen, in denen eine große Erntegutmenge anfällt, getrennt von den übrigen Bereichen zu vergrößern. Dadurch wird erreicht, dass in den übrigen Bereichen auch bei dem Befahren einer extremen Hanglage eine Kornabscheidung über das Obersieb in der normalen Weise fortgesetzt werden kann, so dass in diesen Bereichen dem Untersieb geringere Mengen von Verunreinigungen zugeführt werden. Dabei kann nach Überschreitung des Grenzwertes der Querneigung und/oder des Grenzwertes der Kornabscheidung eine kontinuierliche Veränderung der Sieböffnungsweite erfolgen. Die Sieböffnungsweite am Obersieb wird folglich kontinuierlich an die entsprechenden Anforderungen angepasst.

Außerdem wird nach dem Kennzeichen des Patentanspruchs 4, der sich auf eine erfindungsgemäße Reinigungsvorrichtung eines Mähdreschers bezieht, vorgeschlagen, dass nur das Obersieb einen Stellantrieb zur Änderung von dessen Sieböffnungsweite aufweist, wobei der Stellantrieb über die Steuereinheit betätigbar ist. Es ist folglich eine Vorrichtung vorgesehen, über welche extreme Erntesituationen des Mähdreschers erfasst werden und mit der außerdem ermittelt werden kann, ob die an der Siebvorrichtung erzeugten Querschwingungen ausreichen, um für eine nahezu gleichmäßige Verteilung des Erntegutes auf dem Obersieb zu sorgen.

Eine erste erfindungsgemäße Vorrichtung soll dabei derart ausgebildet sein, dass die Steuereinheit eine Signalverarbeitung aufweist, über welche eine Überschreitung eines Grenzwertes der Hangneigung des Mähdreschers erfasst wird und eine Aktivierung des Stellantriebes im Sinne einer Vergrößerung des die Sieböffnungsweite bestimmenden Querschnitts der Sieböffnungen des Obersiebes bewirkt wird. Alternativ dazu oder in Kombination damit ist weiterhin vorgesehen, dass die Steuereinheit eine Signalverarbeitung aufweist, über welche ein Überschreiten eines Grenzwertes der am Obersieb abgeschiedenen Körnermenge erfasst wird und eine Aktivierung des Stellantriebes im Sinne einer Vergrößerung des die Sieböffnungsweite bestimmenden Querschnitts der Sieböffnungen des Obersiebes bewirkt wird. Werden folglich die Grenzwerte trotz der auf den Siebkasten übertragenen Querschwingungen hinsichtlich der abgeschiedenen Körnermenge überschritten, so wird die Sieböffnungsweite vorzugsweise in dem Sektor, in dem diese größere Körnermenge anfällt, vergrößert. Prinzipiell kann aber auch eine Vergrößerung der entsprechenden Querschnitte der Sieböffnungen des Obersiebes herbeigeführt werden, wenn ein bestimmter Winkel der Seitenneigung des Mähdreschers überschritten wird. Ein derartiger Grenzwert des Neigungswinkels kann dabei vorzugsweise etwa 8 Grad betragen. Selbstverständlich können beide Messwerte gemeinsam zur Verstellung der Sieböffnungsweite herangezogen werden.

Außerdem ist erfindungsgemäß im Zusammenhang mit den zuvor genannten Lösungen vorgesehen, dass das Obersieb in zumindest zwei sich über dessen Länge erstreckende Sektoren unterteilt ist, wobei die außen liegenden Sektoren einen Stellantrieb zur Änderung der Sieböffnungsweite aufweisen, und dass ein hangabwärts gerichteter Sektor nach Überschreitung eines der Grenzwerte oder beider Grenzwerte eine größere Sieböffnungsweite als ein hangaufwärts gerichteter Sektor aufweist. Demzufolge ist eine einfache Ausbildung des Obersiebs möglich, indem dieses beispielsweise zwei in Längsrichtung voneinander getrennte Sektoren aufweist. Zur Verstellung des jeweiligen Sektors kann ein linearer Stellantrieb vorgesehen sein, der als elektromechanischer Spindeltrieb oder hydraulischer Aktuator ausgebildet ist.

Das Obersieb kann zum Zwecke seiner Verstellung im Rahmen einer Ausführungsform der Erfindung lamellenartig ausgebildet sein, wobei diese Lamellen zur Einstellung der Sieböffnungsweite verstellbar sind. Derartige Lamellen eines als Obersieb ausgebildeten Lamellensiebes weisen dabei hintereinander angeordnete und in ihrer Neigung verstellbare Lamellen auf, die Sieböffnungen begrenzen. Alternativ dazu kann das Obersieb auch aus einem Lochblech oder aus Rundstäben hergestellt sein, wobei dann die Sieböffnungsweite durch entsprechend geformte Abdeckelemente oder -bleche, die ebenfalls mit korrespondierenden Öffnungen versehen sein können, verstellt wird. Damit diese Verstellung in beiden Fällen geregelt erfolgt, sind am Obersieb Messwertaufnehmer vorgesehen, die jeweils einen entsprechenden Ist-Wert der Sieböffnungsweite ermitteln.

Die Bezugnahme der Patentansprüche auf die Zeichnung durch die Verwendung von Bezugszeichen soll den Schutzumfang der Patentansprüche auf keinen Fall auf die dargestellten Ausgestaltungsbeispiele beschränken.

Weitere Merkmale der Erfindung sind im Übrigen aus der nachfolgenden Beschreibung und aus der Zeichnung herleitbar, in der zwei Ausführungsbeispiele der Erfindung vereinfacht dargestellt sind. Es zeigen:
- Figur 1: eine schematische Darstellung eines mit einer erfindungsgemäßen Reinigungsvorrichtung versehenen Mähdreschers in seiner Seitenansicht,
- Figur 2: einen vergrößerten Ausschnitt aus der Darstellung der Reinigungsvorrichtung nach Figur 1, wobei Siebe dieser Reinigungsvorrichtung lamellenartig ausgebildet sind,
- Figur 3: eine Darstellung des in den Figuren 1 und 2 verwendeten Obersiebes mit unterschiedlichen Stellungen der Lamellen zur Änderung der Sieböffnungsweite,
- Figur 4: eine Teilansicht einer Reinigungsvorrichtung mit einem abschnittsweise dargestellten Vorbereitungsboden und einem verstellbaren Obersieb,
- Figur 5: ein Ablaufschema in Form eines Flussdiagramms für ein Verfahren zur Verstellung eines Obersiebes, das einen gemeinsamen Stellantrieb für beide Siebhälften aufweisen soll und
- Figur 6: ein Ablaufschema in Form eines Flussdiagrammes für ein Verfahren zum Verstellen eines Obersiebes, wobei jeder Siebhälfte ein separater Stellantrieb zugeordnet sein soll.

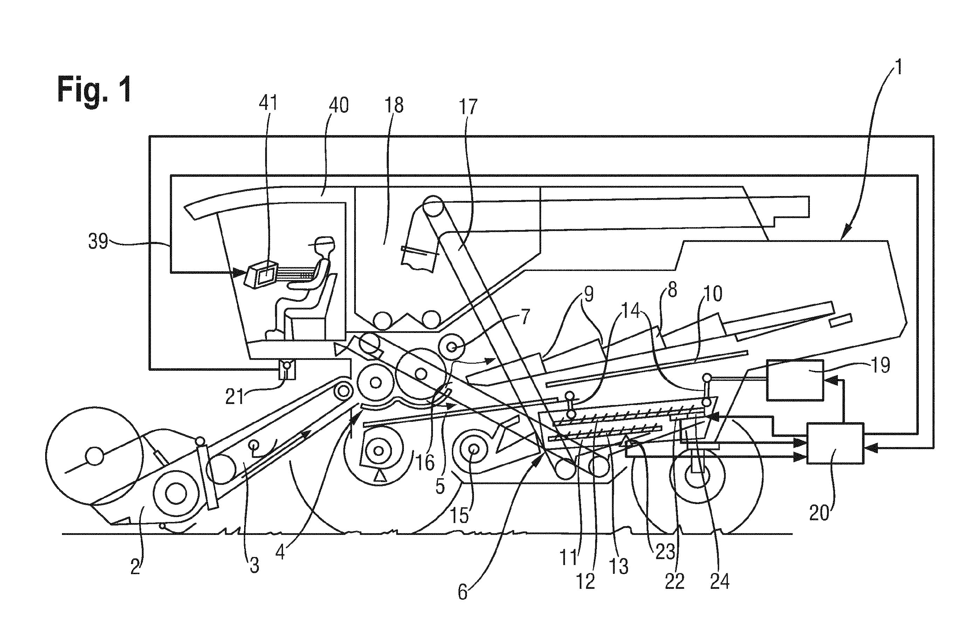

In der Figur 1 ist mit 1 ein selbstfahrender Mähdrescher bezeichnet, der einen frontseitigen Erntevorsatz 2 aufweist, welcher vorzugsweise austauschbar sein soll. Dieser Erntevorsatz 2 dient im vorliegenden Fall als Schneidwerk für eine Getreide- oder Rapsernte. Von dem Erntevorsatz 2 aus führt ein Schrägförderer 3 zu einem Dreschwerk 4, welches im vorliegenden Fall als Tangentialdreschwerk mit einer Mehrtrommelanordnung ausgebildet ist. Selbstverständlich kann das Dreschwerk auch als Tangentialdreschwerk mit nur einer Trommel-Korb-Anordnung oder als Axialdreschwerk mit einer in Längsrichtung des Mähdreschers 1 verlaufenden Trommel-Korb-Anordnung versehen sein.

Das über den Erntevorsatz 2 aufgenommene Halmgut wird somit über den Schrägförderer 3 diesem Dreschwerk 4 zugeführt.

Die weitere Behandlung des Halmgutes soll nachfolgend für eine Getreideernte erläutert werden, wobei diese, soweit es sich um die Aufbereitung des Erntegutes im Anschluss an den Dreschvorgang handelt, in ähnlicher oder identischer Weise bei der Ernte von Raps oder Mais erfolgt. Im Dreschwerk 4 wird der überwiegende Teil des Erntegutes aus dem Halmgut abgeschieden, wobei es sich dabei um Körner handelt, die noch mit einem Anteil von Spreu nicht ausgedroschenen Ähren, Grannen usw. verunreinigt sind. Dieser Anteil gelangt auf einen schwingend angetriebenen Vorbereitungsboden 5, der mittels einer waschbrettartigen Oberfläche den vorgenannten Anteil des Erntegutes entgegen der Fahrtrichtung des Mähdreschers in Richtung einer Reinigungsvorrichtung 6 fördert.

Ein zweiter Strom des Halmgutes, der im Wesentlichen aus Stroh, aber auch einer geringen Restkornmenge besteht, wird aus dem Dreschwerk 4 über eine Strohwendetrommel 7 mehreren über die Breite des davorliegenden Dreschwerks 4 verteilt, also zwischen Seitenblechen des Mähdreschers angeordneten Hordenschüttlern 8 zugeführt, in denen eine Restkornabscheidung erfolgt. Selbstverständlich kann die Restkornabscheidung 8 auch durch eine Axialabscheidevorrichtung erfolgen, die hier nicht dargestellt wurde. Zu diesem Zweck weisen die Hordenschüttler 8 an ihrer oberen Erstreckung mehrere Fallstufen 9, und wie im Einzelnen nicht dargestellt, einen aus Lochblech hergestellten waschbrettartigen Boden auf. Unterhalb dieser Fallstufen 9 und des vorgenannten Lochblechs sind Schüttlerrücklauftaschen vorgesehen, die die im Gutstrom noch vorhandene Restkornmenge, Kurzstroh sowie Spreu in Fahrtrichtung des Mähdreschers auf einen Rücklaufboden 10 fördern. Über diesen Rücklaufboden 10 gelangt diese gesammelte Restkornmenge gemeinsam mit den genannten Verunreinigungen ebenfalls auf den Vorbereitungsboden 5 und somit in die bereits erwähnte Reinigungsvorrichtung 6. Die über Kurbeltriebe schwingend angetriebenen Hordenschüttler 8 fördern darüber hinaus das Stroh oder restliche Halmgut in einen Auswurfbereich des Mähdreschers 1, in welchem dieses auf dem Feld abgelegt oder einem Anbauhäcksler zugeführt wird.

Die Reinigungsvorrichtung 6 besteht, wie weiterhin der Figur 1 entnommen werden kann, aus einem Siebkasten 11 mit darin angeordneten Sieben, die im vorliegenden Fall als ein Obersieb 12 und einem unterhalb diesem angeordneten Untersieb 13 bestehen. Ferner ist der Siebkasten 11 über Gelenklager 14 schwingend im Mähdrescher 1 aufgehängt, wobei er auf Grund der Ausbildung der Gelenklager 14 und seines Antriebes Schwingungen sowohl in Längsrichtung als auch in Querrichtung des Mähdreschers 1 ausführen kann. Ferner ist Bestandteil der Reinigungsvorrichtung 6 ein Gebläse 15, dessen Luftstrom sowohl durch das Obersieb 12 als auch durch das Untersieb 13 strömt und dabei leichtere Bestandteile der Verunreinigungen von den Körnern trennt und über das rückwärtige Ende der Siebanordnung hinaus wegbläst. Weitere über das Obersieb 12 und das Untersieb 13 von den Körnern getrennte Bestandteile, wie z.B. Getreideähren, die nicht von dem Gebläse 15 entfernt werden, gelangen, nachdem sie über die Oberfläche der Siebe 12 und 13 in Richtung des hinteren Bereichs des Mähdreschers 1 befördert worden sind, in eine Überkehr 16, die sie wieder in das Dreschwerk 4 zurückfördert. Im Gegensatz dazu gelangen die von den Verunreinigungen befreiten Körner durch Sieböffnungen des Obersiebes 12 und des Untersiebes 13 in einen Bereich, aus dem sie über einen Korntankelevator 17 einem zum Sammeln des Ernteguts dienenden Korntank 18 zugeführt werden.

Wie weiterhin aus der symbolischen Darstellung in Figur 1 hervorgeht, sollen die Querschwingungen des Siebkastens 11 durch eine Phasenverstelleinrichtung 19 veränderbar sein. Wie der schematischen Darstellung zu entnehmen ist, greift zu diesem Zweck die Phasenverstelleinrichtung 19 im Bereich der Gelenklager 14 bzw. des Antriebes zur Erzeugung der Schwingungen des Siebkastens 11 an. Geregelt werden dabei die Querschwingungen des Siebkastens 11 über eine Steuereinheit 20, die zu diesem Zweck als Sollwertgeber mit der Phasenverstelleinrichtung 19 in Verbindung steht. Weiterhin werden der Steuereinheit die nachfolgend erläuterten Ist-Werte zugeführt. Zum einen handelt es sich dabei um einen über einen Querneigungssensor 21 ermittelten Winkel, um welchen sich der Mähdrescher beim Erntevorgang und dem Befahren einer Hanglage schräg zu seiner Lotrechten bewegt. Zum anderen handelt es sich um einen Ist-Wert der Kornabscheidung, der über einen Sensor 22 zur Messung des Körnerstroms bestimmt und der Steuereinheit 20 zugeführt wird.

In der Darstellung gemäß Figur 1 ist dieser Sensor 22 am Obersieb 12 angeordnet, darüber hinaus kann aber auch ein entsprechender Sensor 23 zur Erfassung des Körnerstroms am Untersieb 13 vorgesehen sein. Über diese beiden Sensoren 22 und 23, die sich vorzugsweise über die Breite des Obersiebes 12 oder des Untersiebes 13 erstrecken oder an mehreren Stellen dieser Siebe vorgesehen sein sollen, wird ermittelt, wie der entsprechende Körnerstrom sich über die Breite der Siebe verteilt. Eine ungleichmäßige Verteilung der Körnerströme ist ebenfalls ein Anzeichen dafür, dass der Mähdrescher gerade eine Hanglage befährt und somit die Reinigungsvorrichtung 6 ungleichmäßig belastet wird. Schließlich ist an dem Obersieb ein aus einem SollwertGeber und einem Ist-Wert-Aufnehmer bestehender Stellantrieb 24 vorgesehen, mittels welchem eine Sieböffnungsweite des Obersiebes 12 einstellbar ist.

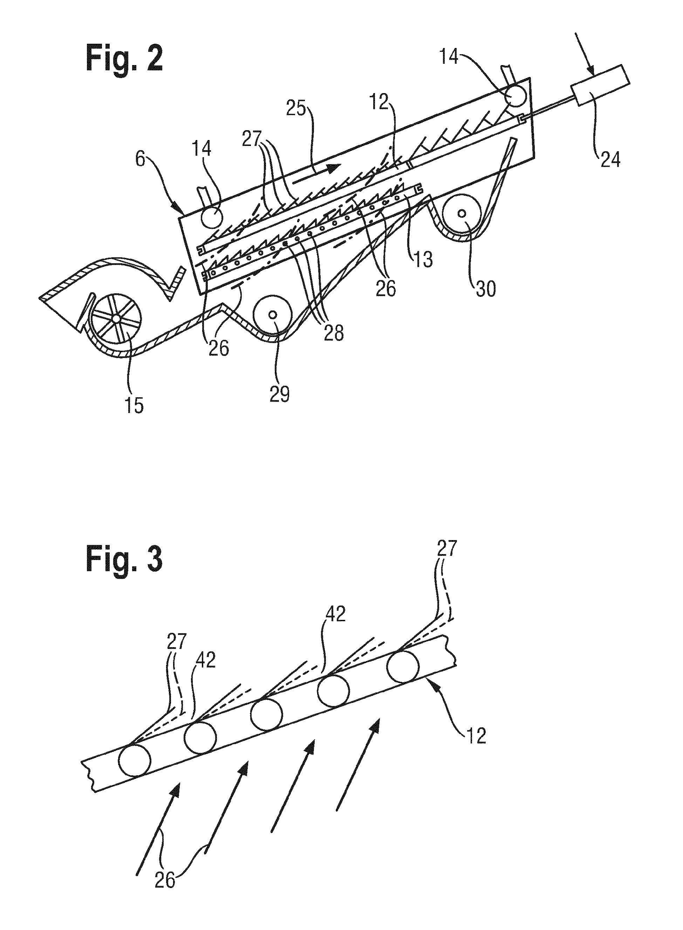

Aus Figur 2 geht eine vergrößerte Darstellung der bereits zu Figur 1 erläuterten Reinigungseinrichtung 6 hervor. Daher sind die bereits im Zusammenhang mit der Figur 1 erläuterten Bauelemente mit den gleichen Bezugszeichen versehen. Zusätzlich zu Figur 1 ist der Figur 2 zu entnehmen, dass sowohl das Obersieb 12 als auch das Untersieb 13 lamellenartig ausgebildet sind. Durch einen Pfeil 25 wird der aus dem Erntegut und dessen Verunreinigungen bestehende Erntegutstrom verdeutlicht, wobei zweite Pfeile 26 verdeutlichen sollen, wie die vom Gebläse 15 gelieferte Luft durch nicht näher dargestellte Öffnungen zwischen Lamellen 27 des Obersiebes 12 und Lamellen 28 des Untersiebes 13 streicht. Diese durch das Obersieb 12 und das Untersieb 13 streichende Luft trennt leichte Bestandteile aus dem Gutstrom, der über die beiden Siebe 12 und 13 gefördert wird, während die die Öffnungen zwischen den Lamellen 27 passierenden Körner zunächst von dem Obersieb 12 auf das Untersieb gelangen, wo sie über noch feinere Öffnungen zwischen den Lamellen 28 von Verunreinigungen befreit, in eine zum Korntankelevator 17 führende Schnecke 29 gelangen. Wie der Figur 2 ferner entnommen werden kann, sollen die Lamellen 28 des Untersiebes 13 derart eingestellt sein, dass eine geringe Sieböffnungsweite realisiert ist. Weitere Bestandteile, die über das Untersieb 13 aus dem Erntegutstrom entfernt werden, gelangen in eine Schnecke 30 der Überkehr 16 und werden über diese, wie bereits erläutert, wieder dem Dreschwerk 4 zugeführt. Dabei soll erfindungsgemäß die Sieböffnungsweite des Obersiebes 12 über den Stellantrieb 24 verstellt werden.

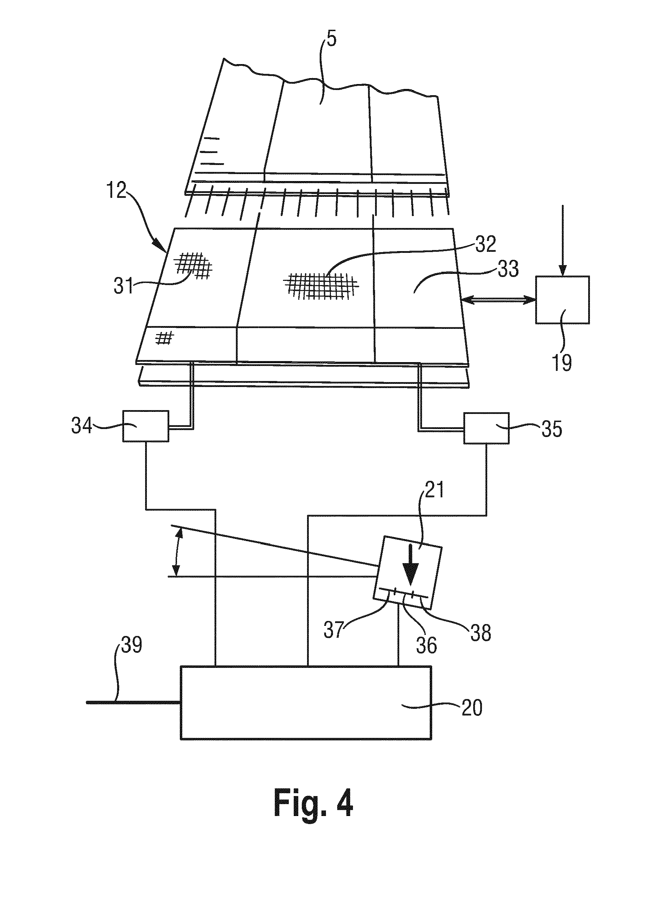

Eine derartige Verstellung bewirkt, wie im Einzelnen in Figur 3 dargestellt ist, ein Verschwenken der Lamellen 27 des Obersiebes 12 aus der gestrichelten Position in die dargestellte Position, in welcher sich ein großer Öffnungsquerschnitt 42 ergibt. Eine derartige Verstellung soll erfindungsgemäß beim Überschreiten eines durch den Querneigungssensor 21 ermittelten Grenzwertes der Querneigung des Mähdreschers 1 und/oder beim Überschreiten einer maximalen vom Sensor 22 ermittelten Körnerstrommenge erfolgen. Dadurch wird verhindert, dass in diesen Fällen, in denen ein bestimmter Grenzwert der Querneigung des Mähdreschers 1 oder einer am Obersieb anfallenden Körnermenge überschritten wird, der Gutstrom vom Obersieb 12 nicht mehr bewältigt werden kann und somit als Körnerverluste auf das Feld gelangt. Weiterhin ist der Figur 4 eine Anordnung zu entnehmen, bei der in Übereinstimmung mit den bereits erläuterten Figuren das Erntegut über den Vorbereitungsboden 5 auf das Obersieb 12 befördert wird. Das dargestellte Obersieb 12 kann als Lochblech oder als maschenartiges Bauelement ausgebildet sein, wobei es vorzugsweise über ein nicht näher dargestelltes Abdeckelement hinsichtlich seiner Sieböffnungsweite verstellbar ist. Wie der Figur 4 weiterhin entnommen werden kann, soll das Obersieb 12, dessen Querschwingungen über die Phasenverstelleinrichtung 19 verändert werden, in Sektoren 31, 32 und 33 unterteilt sein. Anstelle dieser drei Sektoren 31 bis 33 können natürlich auch zwei Sektoren vorgesehen sein, so dass eine Unterteilung mittig des Obersiebes 12 erfolgt.

In der Darstellung nach Figur 4 sind die beiden äußeren Sektoren 31 und 33 mittels zu diesem Zweck vorgesehener Stellantriebe 34 und 35 hinsichtlich ihrer Siebweite veränderbar. Das kann, wie vorstehend erläutert, durch eine Abdeckung und entsprechende Änderung des Querschnittes der Sieböffnungen des Obersiebes 12 geschehen, oder hierfür wird, wie in Figur 3 dargestellt, der entsprechende Öffnungsquerschnitt 30 durch ein Verschwenken der Lamellen 27 des Obersiebes 12 hervorgerufen. Die Stellantriebe 34 und 35, die natürlich mit entsprechenden Ist-Wert-Aufnehmern versehen sind, stehen dabei mit der Steuereinheit 20 in Verbindung. Dieser Steuereinheit 20 wird außerdem auch ein entsprechendes Steuersignal aus dem Querneigungssensor 21 zugeführt.

Dieser Querneigungssensor 21 weist, wie die symbolische Darstellung in Figur 4 erkennen lässt, einen mittleren Verstellbereich 36 auf, an den sich extreme Verstellbereiche 37 und 38 anschließen. Wenn der selbstfahrende Mähdrescher 1 während eines Erntevorgangs eine Hanglage befährt und dabei ein bestimmter Grenzwert seiner Querneigung überschritten wird, so gelangt der Querneigungssensor 21 aus seinem mittleren Verstellbereich 36 in einen der extremen Verstellbereiche 37 und 38. Dieser Grenzwert soll in beiden Richtungen vorzugsweise bei einer Neigung mehr als 8 Grad erreicht werden. Bei dem in Figur 4 dargestellten Eintritt des Querneigungssensors 21 in seinen Verstellbereich 38 wird der Stellantrieb 35 aktiviert, was somit zu einer Vergrößerung der Sieböffnungsweite im Sektor 33 des Obersiebes 12 führt.

Über einen CAN-Bus 39 ist das Steuergerät außerdem mit einer in Figur 1 dargestellten zentralen Einheit in einer Kabine 40 des selbstfahrenden Mähdreschers 1 verbunden. Über diesen CAN-Bus 39 wird dem Fahrer des Mähdreschers 1 eine entsprechende Schräglage des Mähdreschers auf einem Monitor 41 signalisiert. Zu dieser Verbindung der Steuereinheit 20 mit dem entsprechenden in der Kabine 40 angeordneten Monitor 41 wird folglich auf die Figur 1 verwiesen. Aufgrund dieser Anzeige in der Kabine 40 kann der Fahrer unter Umständen auch die Fahrgeschwindigkeit des Mähdreschers 1 reduzieren, wobei auch denkbar ist, eine entsprechende Verstellung des Fahrantriebes in Abhängigkeit von der Querneigung des Mähdreschers 1 als zusätzliche Verstellmaßnahme vorzusehen, die selbsttätig ausgeführt wird.

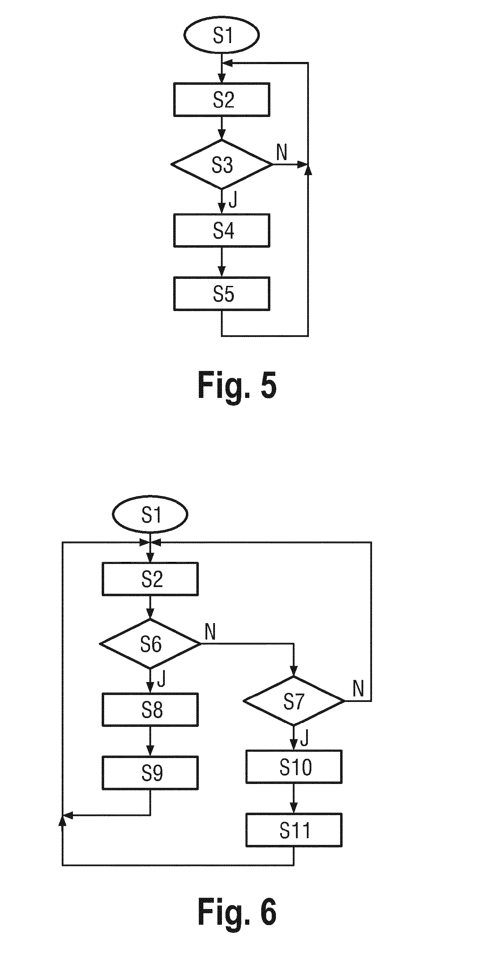

Anhand der Figuren 5 und 6 soll unter Verwendung eines Flussdiagramms der Ablauf der erfindungsgemäßen Verstellung erläutert werden: Gemäß der Figur 5 soll in der zuvor erläuterten Weise nur über einen Stellantrieb 24 eine Verstellung des gesamten Obersiebes 12 erfolgen, während gemäß Figur 6 vorgesehen ist, dass zwei Sektoren des Obersiebes 12 getrennt verstellt werden.

Die Steuereinheit 20 befindet sich zunächst gemäß beiden Figuren 5 und 6 in einer Startposition S1. Zwischen beiden Ausführungsformen nach den Figuren 5 und 6 besteht außerdem Übereinstimmung darin, dass zunächst nach S2 eine Regelung der Querschwingungen des gesamten Siebkastens 11 und somit des Obersiebes 12 und des Untersiebes 13 erfolgt, und dass dann gemäß S3 ein Signal aus dem Querneigungssensor 21 dahingehend verarbeitet wird, ob ein Grenzwert der Querneigung für eine entsprechende Querneigung rechts oder links erreicht wird.

Im Falle eines positiven Signals "Ja" wird nach Figur 5 anschließend unter S4 die Größe der Seitenneigung rechts oder links ermittelt. Unter S5 wird dann eine Übersteuerung der Sieböffnungsweite des Obersiebes 12 im Verhältnis der Größe der entsprechen Seitenneigung rechts oder links eingestellt, demzufolge also die Sieböffnungsweite entsprechend vergrößert.

Nach Figur 6 wird im Anschluss an S2, also im Anschluss an die Regelung der Querschwingungen zunächst gemäß S6 geprüft ob die Querneigungsgrenze rechts erreicht ist und im Falle eines Signals "Nein" wird anschließend gemäß S7 geprüft, ob die Querneigungsgrenze links erreicht ist. Sodann wird im Falle eines positiven Signals aus S6, gemäß S8 die Querneigungsgröße rechts ermittelt, um dann gemäß S9 die Sieböffnungsweite des entsprechenden rechten Sektors 33 über den Stellantrieb 35 zu bewirken (vergleiche hierzu auch Figur 4). Wird hingegen nach der Ermittlung des Wertes für die Querneigung nach S7 ein positives Signal erzeugt, so erfolgt unter S10 eine Ermittlung der Querneigung, die den Grenzwert überschreitet und unter S11 wird im Verhältnis dazu der linke Sektor 31 über den Stellantrieb 34 in Richtung einer größeren Siebweite verstellt.

### Bezugszeichenliste

- 1: Mähdrescher
- 2: Erntevorsatz
- 3: Schrägförderer
- 4: Dreschwerk
- 5: Vorbereitungsboden
- 6: Reinigungsvorrichtung
- 7: Strohwendetrommel
- 8: Hordenschüttler
- 9: Fallstufen
- 10: Rücklaufboden
- 11: Siebkasten
- 12: Obersieb
- 13: Untersieb
- 14: Gelenklager
- 15: Gebläse
- 16: Überkehr
- 17: Korntankelevator
- 18: Korntank
- 19: Phasenverstelleinrichtung
- 20: Steuereinheit
- 21: Querneigungssensor
- 22: Sensor für Körnerstrom an 12
- 23: Sensor für Körnerstrom an 13
- 24: Stellantrieb
- 25: erster Pfeil für Erntegutstrom
- 26: zweite Pfeile für Luftstrom
- 27: Lamellen am Obersieb
- 28: Lamellen am Untersieb
- 29: Schnecke für Korntankelevator
- 30: Schnecke für Überkehr
- 31: linker Sektor
- 32: mittlerer Sektor
- 33: rechter Sektor
- 34: linker Stellantrieb
- 35: rechter Stellantrieb
- 36: mittlerer Verstellbereich von 21
- 37: extremer Verstellbereich von 21
- 38: extremer Verstellbereich von 21
- 39: CAN-Bus
- 40: Kabine
- 41: Monitor
- 42: Öffnungsquerschnitte

- S1: Startposition
- S2: Regelung der Querschwingungen in Abhängigkeit von der Querneigung des Mähdreschers
- S3: Erreichen der Querneigungsgrenze rechts oder links
- S4: Ermittlung der Größe der Querneigung
- S5: Verstellung der Sieböffnungsweite des Obersiebes 12 in Abhängigkeit von der Größe der Querneigung rechts oder links
- S6: Prüfung, ob die Querneigungsgrenze rechts erreicht ist
- S7: Prüfung, ob die Querneigungsgrenze links erreicht ist
- S8: Ermittlung der Querneigung rechts
- S9: Verstellung der Sieböffnungsweite des Obersiebs 12 in Abhängigkeit von dem Wert der Querneigung rechts
- S10: Ermittlung der Größe der Querneigung links
- S11: Einstellung der Sieböffnungsweite des linken Sektors (Sektor 31) in Abhängigkeit von der Querneigung

## Patentansprüche

1. Verfahren zum Betreiben einer Reinigungsvorrichtung (6) eines Mähdrescher (1) mit einer Siebvorrichtung, in welcher Körner von sonstigen Verunreinigungen getrennt werden, wobei die Siebvorrichtung einen über einen Schwingantrieb in Längs- und Querschwingungen versetzten Siebkasten (11) aufweist, der ein Obersieb (12) sowie zumindest ein Untersieb (13) aufnimmt, mit einer Messeinrichtung (22, 23), die zumindest dem Obersieb (12) zugeordnet ist und an diesem eine Erntegutverteilung über die an diesem erzielte Kornabscheidung bestimmt, mit einem Querneigungssensor (21), der eine Querneigung des Mähdreschers (1) ermittelt, und wobei die ermittelten Messwerte einer Steuereinheit (20) zugeführt werden, über die eine Phasenverstellung der Querschwingungen des Schwingantriebes und eine Verstellung der Siebvorrichtung gesteuert werden, **dadurch gekennzeichnet, dass** bei Überschreitung eines Grenzwertes der Querneigung des Mähdreschers (1) und/oder eines Grenzwertes der am Obersieb (12) erzielten Kornabscheidung ein die Sieböffnungsweite bestimmender Querschnitt nur am Obersieb (12) vergrößert wird, wobei das Obersieb (12) in zumindest zwei sich über dessen Länge erstreckende Sektoren (31, 32, 33) unterteilt ist, wobei jeder der außen liegenden Sektoren (31, 33) einen Stellantrieb (34, 35) zur Änderung der Sieböffnungsweite aufweist, wobei an einem hangabwärts gerichteten Sektor (31, 33) des Obersiebes (12) bei Überschreitung des Grenzwertes der Querneigung des Mähdreschers und/oder des Grenzwertes der Kornabscheidung die Sieböffnungsweite vergrößert wird, so dass ein hangabwärts gerichteter Sektor (34 oder 35) nach Überschreitung eines der Grenzwerte oder beider Grenzwerte eine größere Sieböffnungsweite als ein hangaufwärts gerichteter Sektor (34 oder 35) aufweist.

2. Verfahren nach Anspruch 1, **dadurch gekennzeichnet, dass** die Erntegutverteilung am Obersieb (12) über die an diesem erzielte Kornabscheidung bestimmt wird, wobei zu diesem Zweck ein Körnerstrom an zumindest einer Stelle unterhalb des Obersiebes (12) gemessen wird.

3. Verfahren nach Anspruch 1, **dadurch gekennzeichnet, dass** nach Überschreitung des Grenzwertes der Querneigung und/oder des Grenzwertes der Kornabscheidung eine kontinuierliche Veränderung der Sieböffnungsweite erfolgt.

4. Reinigungsvorrichtung eines Mähdreschers (1) mit einer über einen Schwingantrieb in Längs- und Querschwingungen versetzten Siebvorrichtung, die einen Siebkasten (11) mit einem darin angeordneten Obersieb (12) sowie zumindest einem Untersieb (13) aufweist, mit einer zumindest dem Obersieb (12) zugeordneten Messeinrichtung (22, 23) zur Bestimmung der am Obersieb (12) erzielten Erntegutverteilung 2. r über die an diesem erzielte Kornabscheidung sowie einem Querneigungssensor (21) zur Erfassung einer Neigung des Mähdreschers (1) an einem Hang, wobei die Messeinrichtung (22, 23) und der Querneigungssensor (21) mit einer Steuereinheit (20) verbunden sind, welche eine Phasenverstellung der Querschwingungen des Schwingantriebes und eine Sieböffnungsweite regelt, **dadurch gekennzeichnet, dass** nur das Obersieb (12) einen Stellantrieb (24, 34, 35) zur Änderung von dessen Sieböffnungsweite aufweist, wobei der Stellantrieb (24, 34, 35) über die Steuereinheit (20) betätigbar ist, wobei das Obersieb (12) in zumindest zwei sich über dessen Länge erstreckende Sektoren (31, 32, 33) unterteilt ist, wobei jeder der außen liegenden Sektoren (31, 33) einen Stellantrieb (34, 35) zur Änderung der Sieböffnungsweite aufweist, und dass ein hangabwärts gerichteter Sektor (34 oder 35) nach Überschreitung eines Grenzwertes der Querneigung des Mähdreschers (1) und/oder eines Grenzwertes der am Obersieb (12) erzielten Kornabscheidung eine größere Sieböffnungsweite als ein hangaufwärts gerichteter Sektor (34 oder 35) aufweist.

5. Reinigungsvorrichtung eines Mähdreschers nach Anspruch 5, **dadurch gekennzeichnet, dass** die Steuereinheit (20) eine Signalverarbeitung aufweist, über welche ein Überschreiten eines Grenzwertes der Hangneigung des Mähdreschers (1) erfasst wird und eine Aktivierung des Stellantriebes (24, 34, 35) im Sinne einer Vergrößerung des die Sieböffnungsweite bestimmenden Querschnitts der Sieböffnungen des Obersiebes (12) bewirkt wird.

6. Reinigungsvorrichtung eines Mähdreschers nach Anspruch 5, **dadurch gekennzeichnet, dass** die Steuereinheit (20) eine Signalverarbeitung aufweist, über welche ein Überschreiten eines Grenzwertes der an den Sieben (12, 13) abgeschiedenen Körnermenge erfasst wird und eine Aktivierung des Stellantriebes (24, 34, 35) im Sinne einer Vergrößerung des die Sieböffnungsweite bestimmenden Querschnitts der Sieböffnungen des Obersiebes (12) bewirkt wird.

7. Reinigungsvorrichtung eines Mähdreschers nach Anspruch 5, **dadurch gekennzeichnet, dass** Obersieb (12) lamellenartig ausgebildet ist, wobei über die Lamellen (27) die Sieböffnungsweite einstellbar ist.

8. Reinigungsvorrichtung eines Mähdreschers nach Anspruch 5, **dadurch gekennzeichnet, dass** die Größe der Öffnungsquerschnitte des Obersiebes (12), das vorzugsweise aus Lochblech oder aus Rundstäben hergestellt ist, mittels verschiebbarer Abdeckelemente veränderbar ist.

## Claims

1. A method of operating a cleaning apparatus (6) of a combine harvester (1) having a screening apparatus in which grains are separated from other impurities, wherein the screening apparatus has a screening box which is caused to produce longitudinal and transverse oscillations by way of an oscillation drive and which accommodates an upper screen (12) and at least one lower screen (13), having a measuring device (22, 23) which is associated at least with the upper screen (12) and determines at same a crop material distribution by way of the grain separation achieved at same, having a transverse inclination sensor (21) which ascertains a transverse inclination of the combine harvester (1), and wherein the ascertained measurement values are fed to a control unit (20), by way of which a phase adjustment of the transverse oscillations of the oscillation drive and an adjustment of the screening apparatus are controlled, **characterised in that** when a limit value of the transverse inclination of the combine harvester (1) and/or a limit value of the grain separation achieved at the upper screen (12) is exceeded a cross-section which determines the screen opening width is increased only at the upper screen (12), wherein the upper screen (12) is subdivided into at least two sectors (31, 32, 33) extending over its length, wherein each of the outwardly disposed sectors (31, 33) has an adjusting drive (34, 35) for changing the screen opening width, wherein the screen opening width is increased at a down-slope directed sector (31, 33) of the upper screen (12) when the limit value of the transverse inclination of the combine harvester and/or the limit value of grain separation is exceeded so that after one of the limit values or both limit values is or are exceeded a down-slope directed sector (34 or 35) has a larger screen opening width than an up-slope directed sector (34 or 35).

2. A method according to claim 1 **characterised in that** the crop material distribution at the upper screen (12) is determined by way of the grain separation achieved at same, wherein for that purpose a grain flow is measured at at least one location beneath the upper screen (12).

3. A method according to claim 1 **characterised in that** there is a continuous variation in the screen opening width after the limit value of the transverse inclination and/or the limit value of the grain separation is exceeded.

4. A cleaning apparatus of a combine harvester (1) having a screening apparatus which is caused to produce longitudinal and transverse oscillations by way of an oscillation drive and which has a screening box (11) with an upper screen (12) arranged therein and at least one lower screen (13), a measuring device (22, 23) associated at least with the upper screen (12) for determining the crop material distribution which is achieved at the upper screen (12) by way of the grain separation achieved at same, and a transverse inclination sensor (22) for detecting an inclination of the combine harvester (1) at a slope, wherein the measuring device (22, 23) and the transverse inclination sensor (21) are connected to a control unit (20) which regulates a phase adjustment of the transverse oscillations of the oscillation drive and a screen opening width, **characterised in that** only the upper screen (12) has an adjusting drive (24, 34, 35) for changing the screen opening width thereof, wherein the adjusting drive (24, 34, 35) is actuable by way of the control unit (20), wherein the upper screen (12) is subdivided into at least two sectors (31, 32, 33) extending over the length thereof, wherein each of the outwardly disposed sectors (31, 33) has an adjusting drive (34, 35) for changing the screen opening width and that after a limit value of the transverse inclination of the combine harvester (1) and/or a limit value of the grain separation achieved at the upper screen (12) is exceeded a down-slope directed sector (34 or 35) has a larger screen opening width than an up-slope directed sector (34 or 35).

5. A cleaning apparatus of a combine harvester according to claim 4 **characterised in that** the control unit (20) has a signal processing means, by way of which the exceeding of a limit value of the slope inclination of the combine harvester (1) is detected and activation of the adjusting drive (24, 34, 35) is implemented in the sense of an increase in the cross-section, that determines the screen opening width, of the screen openings of the upper screen (12).

6. A cleaning apparatus of a combine harvester according to claim 5 **characterised in that** the control unit (20) has a signal processing means, by way of which the exceeding of a limit value of the amount of grains separated at the screens (12, 13) is detected and activation of the adjusting drive (24, 34, 35) is implemented in the sense of an increase in the cross-section, that determines the screen opening width, of the screen openings of the upper screen (12).

7. A cleaning apparatus of a combine harvester according to claim 5 **characterised in that** the upper screen (12) is of a plate-like configuration, wherein the screen opening width is adjustable by way of the plates (27).

8. A cleaning apparatus of a combine harvester according to claim 5 **characterised in that** the size of the opening cross-sections of the upper screen (12) which is preferably made from apertured plate or from round bars is variable by means of displaceable cover elements.

## Revendications

1. Procédé pour actionner un dispositif de nettoyage (6) d'une moissonneuse-batteuse (1) comprenant un dispositif de tamisage dans lequel les grains sont séparés d'impuretés diverses, le dispositif de tamisage comprenant un caisson de nettoyage (11) qui est animé d'oscillations longitudinales et transversales par l'intermédiaire d'un moyen d'entraînement oscillant et qui reçoit un tamis supérieur (12) ainsi qu'au moins un tamis inférieur (13), comprenant un dispositif de mesure (22, 23) qui est associé au moins au tamis supérieur (12) et, au niveau de celui-ci, détermine une répartition du produit de récolte par l'intermédiaire de la séparation des grains qui y est réalisée, comprenant un capteur d'inclinaison transversale (21) qui détermine une inclinaison transversale de la moissonneuse-batteuse (1), et les valeurs mesurées déterminées étant transmises à une unité de commande (20) par l'intermédiaire de laquelle sont commandés un déphasage des oscillations transversales du moyen d'entraînement oscillant et un réglage du dispositif de tamisage, **caractérisé en ce que**, en cas de dépassement d'une valeur limite d'inclinaison transversale de la moissonneuse-batteuse (1) et/ou d'une valeur limite de séparation de grain obtenue au niveau du tamis supérieur (12), une section transversale déterminant la largeur d'ouverture de tamis n'est augmentée que sur le tamis supérieur (12), le tamis supérieur (12) étant divisé en au moins deux secteurs (31, 32, 33) s'étendant sur sa longueur, chacun des secteurs extérieurs (31, 33) comportant un mécanisme de commande (34, 35) pour modifier la largeur d'ouverture de tamis, sur un secteur descendant (31, 33) du tamis supérieur (12), en cas de dépassement de la valeur limite d'inclinaison transversale de la moissonneuse-batteuse et/ou de la valeur limite de séparation de grain, la largeur d'ouverture de tamis étant augmentée de façon que, après dépassement d'une des valeurs limites ou des deux valeurs limites, un secteur descendant (34 ou 35) présente une largeur d'ouverture de tamis supérieure à celle d'un secteur ascendant (34 ou 35).

2. Procédé selon la revendication 1, **caractérisé en ce que** la répartition du produit de récolte au niveau du tamis supérieur (12) est déterminée par l'intermédiaire de la séparation de grain qui y est réalisée, un flux de grains étant mesuré, à cet effet, en au moins un point situé sous le tamis supérieur (12).

3. Procédé selon la revendication 1, **caractérisé en ce que**, après dépassement de la valeur limite d'inclinaison transversale et/ou de la valeur limite de séparation de grain, il se produit une modification continue de la largeur d'ouverture de tamis.

4. Dispositif de nettoyage d'une moissonneuse-batteuse (1) comprenant un dispositif de tamisage qui est animé d'oscillations longitudinales et transversales par l'intermédiaire d'un moyen d'entraînement oscillant et qui comprend un caisson de nettoyage (11) avec un tamis supérieur (12) disposé à l'intérieur ainsi qu'avec au moins un tamis inférieur (13), comprenant un dispositif de mesure (22, 23) qui est associé au moins au tamis supérieur (12) pour déterminer la répartition du produit de récolte obtenue au niveau du tamis supérieur (12) par l'intermédiaire de la séparation des grains qui y est réalisée, et comprenant un capteur d'inclinaison transversale (21) pour déterminer une inclinaison de la moissonneuse-batteuse (1) dans une pente, le dispositif de mesure (22, 23) et le capteur d'inclinaison transversale (21) étant reliés à une unité de commande (20) qui régule un déphasage des oscillations transversales du moyen d'entraînement oscillant et une largeur d'ouverture de tamis, **caractérisé en ce que** seul le tamis supérieur (12) comprend un mécanisme de commande (24, 34, 35) pour modifier sa largeur d'ouverture de tamis, le mécanisme de commande (24, 34, 35) pouvant être actionné par l'intermédiaire de l'unité de commande (20), le tamis supérieur (12) étant divisé en au moins deux secteurs (31, 32, 33) s'étendant sur sa longueur, chacun des secteurs extérieurs (31, 33) comportant un mécanisme de commande (34, 35) pour modifier la largeur d'ouverture de tamis, et **en ce qu'**après dépassement d'une valeur limite d'inclinaison transversale de la moissonneuse-batteuse (1) ou d'une valeur limite de séparation de grain obtenue au niveau du tamis supérieur (12) un secteur descendant (34 ou 35) présente une largeur d'ouverture de tamis supérieure à celle d'un secteur ascendant (34 ou 35).

5. Dispositif de nettoyage d'une moissonneuse-batteuse selon la revendication 5, **caractérisé en ce que** l'unité de commande (20) comporte un moyen de traitement de signal par l'intermédiaire duquel un dépassement d'une valeur limite de dévers de la moissonneuse-batteuse (1) est détecté et une activation du mécanisme de commande (24, 34, 35) est provoquée dans le but d'augmenter la section transversale des ouvertures de tamisage du tamis supérieur (12), laquelle détermine la largeur d'ouverture de tamis.

6. Dispositif de nettoyage d'une moissonneuse-batteuse selon la revendication 5, **caractérisé en ce que** l'unité de commande (20) comporte un moyen de traitement de signal par l'intermédiaire duquel un dépassement d'une valeur limite de la quantité de grain séparée au niveau des tamis (12, 13) est détectée et une activation du mécanisme de commande (24, 34, 35) est provoquée dans le but d'augmenter la section transversale des ouvertures de tamisage du tamis supérieur (12), laquelle détermine la largeur d'ouverture de tamis.

7. Dispositif de nettoyage d'une moissonneuse-batteuse selon la revendication 5, **caractérisé en ce que** le tamis supérieur (12) est configuré avec des lamelles, la largeur d'ouverture de tamis étant réglable par l'intermédiaire des lamelles (27).

8. Dispositif de nettoyage d'une moissonneuse-batteuse selon la revendication 5, **caractérisé en ce que** la dimension des sections d'ouverture du tamis supérieur (12), lequel est fabriqué de préférence en tôle perforée ou en barres rondes, est modifiable au moyen d'éléments de recouvrement coulissants.
